# EUROPEAN PATENT APPLICATION

(11) **EP 4 563 941 A1**
(43) Date of publication of application: **04.06.2025**
(21) Application number: 23872231.8
(22) Date of filing: 25.09.2023
(51) Int. Cl.: G01C 21/26, G06F 3/01, G06F 3/16, G06T 7/20, G08G 1/00

(54) **INFORMATION PROCESSING APPARATUS, INFORMATION PROCESSING METHOD, AND PROGRAM**

(30) Priority: 27.09.2022 JP 2022153456
(71) Applicant: HONDA MOTOR CO., LTD., Minato-ku Tokyo 107-8556 (JP)
(72) Inventor: JAIN Aman, Wako-shi, Saitama 351-0193 (JP); KONDAPALLY Anirudh reddy, Wako-shi, Saitama 351-0193 (JP); YAMADA Kentaro, Wako-shi, Saitama 351-0193 (JP)
(74) Representative: Kiwit, Benedikt
(86) International application number: PCT/JP2023/034642
(87) International publication number: WO 2024/071006

(57) **Abstract**

An information processing apparatus includes an acquisition unit configured to acquire a captured image of surroundings of a mobile body captured by a camera mounted on the mobile body, an input instruction sentence input by a person of the mobile body, and gesture information related to a gesture made by the person, an extraction unit configured to extract one or more instructions included in the input instruction sentence by performing first predetermined processing on the input instruction sentence, a first generation unit configured to generate an estimated distribution for a position indicated by the person by performing second predetermined processing on the gesture information, a second generation unit configured to generate a probabilistic scene graph from the captured image, in which a probability is assigned to each object contained in the captured image, and an identification unit configured to identify an object indicated by the person in the captured image on the basis of the one or more instructions, the estimated distribution, and the probabilistic scene graph.

## Description

### TECHNICAL FIELD

The present invention relates to an information processing apparatus, an information processing method, and a program.

### BACKGROUND ART

Conventionally, there is known a technology for identifying an object in an image in response to a multimodal input including the image. For example, Patent Document 1 describes a technology for detecting an emergency vehicle included in image data by inputting audio data and the image data into an artificial neural network such as a deep neural network (DNN).

### Citation List

### Patent Document

Patent Document 1: Japanese Unexamined Patent Application, First Publication No. 2022-96601

### Non Patent Document

Non Patent Document 1: Drew A. Hudson, Christopher D. Manning, "Learning by Abstraction: The Neural State Machine," NeurIPS, pages 5901-5914. (2019)

### SUMMARY OF INVENTION

### Technical Problem

However, when multimodal input is processed using, for example, a method such as a DNN as in the technology described in Patent Document 1, the processing performed inside a model is a black box, and it is difficult to grasp the actual situation. In other words, with these methods, it is not clear whether a relationship between different types of information (video, sound, text, and the like) is properly learned. Furthermore, methods such as a DNN often require a large amount of data for learning, and it may be very costly to realize the function.

Furthermore, Non-Patent Document 1 describes a neural state machine that converts multimodal raw information obtained by a sensor into a conceptual expression in a common abstract space and performs inference on a graph (a scene graph) in which these conceptual expressions are structured. The neural state machine is superior to the technology described in Patent Document 1 in that processing content on the graph is transparent and it does not require a large amount of data for the processing. However, the technology described in Non-Patent Document 1 does not provide a means to resolve ambiguity that arises in the inference without utilizing modalities such as a line of sight or a gesture of a person.

The present invention has been made in consideration of the circumstances described above, and one of its objectives is to provide an information processing apparatus, an information processing method, and a program that can utilize modalities such as a line of sight and a gesture of a person, and resolve ambiguity that arises during an inference process.

### Solution to Problem

The information processing apparatus, information processing method, and program of the present invention employ the following configuration.
(1): An information processing apparatus according to one aspect of the present invention includes an acquisition unit configured to acquire a captured image of surroundings of a mobile body captured by a camera mounted on the mobile body, an input instruction sentence input by a person of the mobile body, and gesture information related to a gesture made by the person, an extraction unit configured to extract one or more instructions included in the input instruction sentence by performing first predetermined processing on the input instruction sentence, a first generation unit configured to generate an estimated distribution for a position indicated by the person by performing second predetermined processing on the gesture information, a second generation unit configured to generate a probabilistic scene graph from the captured image, in which a probability is assigned to each object contained in the captured image, and an identification unit configured to identify an object indicated by the person in the captured image on the basis of the one or more instructions, the estimated distribution, and the probabilistic scene graph.
(2): In the aspect of (1) described above, the first predetermined processing may be processing of performing at least dependency parsing and attribute classification on the input instruction sentence.
(3): In the aspect of (1) described above, the second predetermined processing may be processing of generating the estimated distribution on the basis of key points of the person included in the gesture information.
(4): In the aspect of any one of (1) to (3) described above, the identification unit may identify the object by sequentially updating the probability of each object contained in the probabilistic scene graph using the one or more extracted instructions.
(5): In the aspect of (4) described above, the second generation unit may set an initial value of the probability assigned to each object contained in the probabilistic scene graph on the basis of the estimated distribution.
(6): In the aspect of (4) described above, the identification unit may generate a question for identifying one of a plurality of objects when the plurality of objects have been identified by the update.
(7): An information processing method according to another aspect of the present invention includes, by a computer, acquiring a captured image of surroundings of a mobile body captured by a camera mounted on the mobile body, an input instruction sentence input by a person of the mobile body, and gesture information related to a gesture made by the person, extracting one or more instructions included in the input instruction sentence by performing first predetermined processing on the input instruction sentence, generating an estimated distribution for a position indicated by the person by performing second predetermined processing on the gesture information, generating a probabilistic scene graph from the captured image, in which a probability is assigned to each object contained in the captured image, and identifying an object indicated by the person in the captured image on the basis of the one or more instructions, the estimated distribution, and the probabilistic scene graph.
(8): A program according to still another aspect of the present invention causes a computer to execute acquiring a captured image of surroundings of a mobile body captured by a camera mounted on the mobile body, an input instruction sentence input by a person of the mobile body, and gesture information related to a gesture made by the person, extracting one or more instructions included in the input instruction sentence by performing first predetermined processing on the input instruction sentence, generating an estimated distribution for a position indicated by the person by performing second predetermined processing on the gesture information, generating a probabilistic scene graph from the captured image, in which a probability is assigned to each object contained in the captured image, and identifying an object indicated by the person in the captured image on the basis of the one or more instructions, the estimated distribution, and the probabilistic scene graph.

### Advantageous Effects of Invention

According to the aspects of (1) to (8), it is possible to utilize modalities such as a line of sight and a gesture of a person, and resolve ambiguity that arises during an inference process.

### BRIEF DESCRIPTION OF DRAWINGS

[FIG. 1] A diagram which shows an example of a configuration of a mobile body 1 and a control apparatus 100 according to an embodiment.
[FIG. 2] A see-through view of the mobile body 1, seen from above.
[FIG. 3] A diagram which shows an example of a captured image IM captured by an external camera.
[FIG. 4] A diagram for describing an overview of first predetermined processing performed by an extraction unit 120.
[FIG. 5] A diagram for describing an overview of second predetermined processing performed by a generation unit 130.
[FIG. 6] A diagram for describing update processing of a probabilistic scene graph, performed by an identification unit 140.
[FIG. 7] A diagram for describing generation processing of a question sentence, performed by the identification unit 140.
[FIG. 8] A flowchart which shows an example of a flow of processing executed by the control apparatus 100.

### DESCRIPTION OF EMBODIMENTS

Hereinafter, with reference to the drawings, an embodiment of an information processing apparatus, an information processing method, and a program of the present invention will be described. The information processing apparatus is mounted on a mobile body. The mobile body moves on both a roadway and a predetermined area different from the roadway. The mobile body may be referred to as micromobility. An electric kickboard is a type of micromobility. The predetermined area is, for example, a sidewalk. The predetermined area may be a part or all of a road side, a bicycle lane, a public open space, and the like, or may include all of a sidewalk, a road side, a bicycle lane, a public open space, and the like. As described below, the information processing apparatus according to the present embodiment identifies an object indicated by a person on the basis of a captured image of surroundings of the mobile body, an input instruction sentence input by a person associated with the mobile body, and a gesture made by the person. In the following description, the person associated with the mobile body is described as an occupant who is on board the mobile body, but the present invention is not limited to such a configuration, and may be a person who inputs an instruction sentence outside the mobile body (for example, to indicate a waiting place of the mobile body after getting off).

### [Overall configuration]

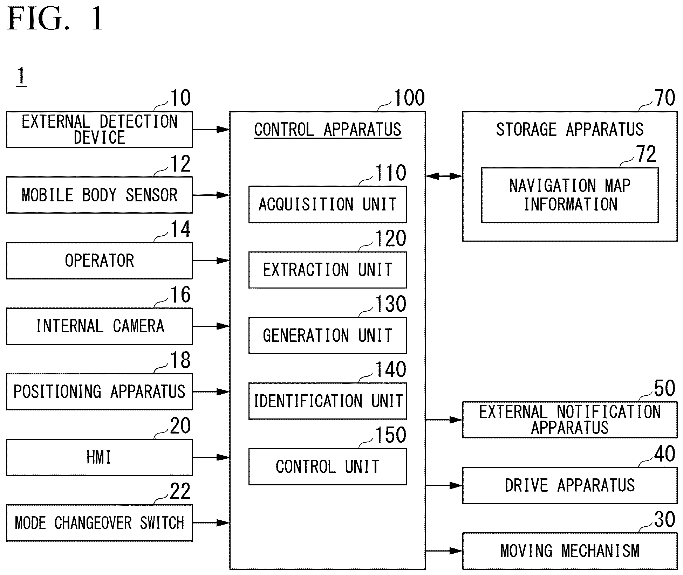

FIG. 1 is a diagram which shows an example of a configuration of a mobile body 1 and a control apparatus 100 according to an embodiment. The mobile body 1 is equipped with, for example, an external detection device 10, a mobile body sensor 12, an operator 14, an internal camera 16, a positioning apparatus 18, an HMI 20, a mode changeover switch 22, a moving mechanism 30, a drive apparatus 40, an external notification apparatus 50, a storage apparatus 70, and a control apparatus 100. Note that some of these constituents that are not essential for realizing functions of the present invention may also be omitted. The mobile body is not limited to a vehicle, but may include a small mobility device that travels alongside a walking user to carry luggage or lead a person, and may also include other mobile bodies capable of autonomous movement (such as walking robots).

The external detection device 10 is a device whose detection range is a traveling direction of the mobile body 1. The external detection device 10 includes an external camera, a radar device, a light detection and ranging (LIDAR), a sensor fusion device, and the like. The external detection device 10 outputs information indicating a result of the detection (an image, a position of an object, or the like) to the control apparatus 100. In particular, in the present embodiment, the external detection device 10 outputs a captured image of surroundings of the mobile body 1, captured by the external camera, to the control apparatus 100.

The mobile body sensor 12 includes, for example, a speed sensor, an acceleration sensor, a yaw rate (angular speed) sensor, an orientation sensor, an operation amount detection sensor attached to the operator 14, and the like. The operator 14 includes, for example, an operator for instructing acceleration or deceleration (for example, an accelerator pedal or a brake pedal) and an operator for instructing steering (for example, a steering wheel). In this case, the mobile body sensor 12 may include an accelerator opening sensor, a brake depression amount sensor, a steering torque sensor, and the like. The mobile body 1 may also include, as the operator 14, an operator of a type other than described above (for example, a non-annular rotating operator, a joystick, a button, or the like).

The internal camera 16 captures an image of at least the head of the occupant of the mobile body 1 from the front. The internal camera 16 is a digital camera that uses an imaging element such as a charge coupled device (CCD) or a complementary metal oxide semiconductor (CMOS). The internal camera 16 outputs the captured image to the control apparatus 100.

The positioning apparatus 18 is an apparatus that measures a position of the mobile body 1. The positioning apparatus 18 is, for example, a global navigation satellite system (GNSS) receiver, and identifies the position of the mobile body 1 on the basis of a signal received from a GNSS satellite, and outputs position information. The position information of the mobile body 1 may be estimated based on a position of a Wi-Fi base station to which a communication device which will be described below is connected.

The HMI 20 includes a display device, a speaker, a touch panel, keys, and the like. The occupant of the mobile body 1 sets a destination of the mobile body 1 via, for example, the HMI 20, and the control unit 150, which will be described below, causes the mobile body 1 to travel to the set destination. In particular, in the present embodiment, the HMI 20 includes a voice input device such as a microphone, and the occupant of the mobile body 1 speaks an instruction sentence instructing a stopping position of the mobile body 1 to input it to the voice input device. The HMI 20 analyzes a voice of the input instruction sentence to convert it into text, and outputs it to the control apparatus 100. Alternatively, the HMI 20 may receive an instruction sentence input as text by the occupant via, for example, a touch panel, and output the received instruction sentence to the control apparatus 100.

The mode changeover switch 22 is a switch operated by the occupant. The mode changeover switch 22 may be a mechanical switch or a graphical user interface (GUI) switch set on a touch panel of the HMI 20. The mode changeover switch 22 receives, for example, an operation of switching a driving mode to one of the following modes: Mode A: an assist mode in which one of a steering operation and an acceleration or deceleration control is performed by the occupant and the other is performed automatically (there may be a mode A-1 in which the steering operation is performed by the occupant and the acceleration or deceleration control is performed automatically, and a mode A-2 in which the acceleration or deceleration operation is performed by the occupant and steering control is performed automatically), Mode B: a manual driving mode in which the steering operation and the acceleration or deceleration operation are performed by the occupant, and Mode C: an automatic driving mode in which the operation control and the acceleration or deceleration control are performed automatically.

The moving mechanism 30 is a mechanism for moving the mobile body 1 on a road. The moving mechanism 30 is, for example, a group of wheels including steering wheels and driving wheels. In addition, the moving mechanism 30 may be legs for walking on multiple legs.

The drive apparatus 40 outputs force to the moving mechanism 30 to move the mobile body 1. For example, the drive apparatus 40 includes a motor that drives the drive wheels, a battery that stores power to be supplied to the motor, and a steering device that adjusts a steering angle of steering wheels. The drive apparatus 40 may also include an internal combustion engine or a fuel cell as a driving force output device or a power generation device. In addition, the drive apparatus 40 may further include a brake device that utilizes frictional force or air resistance.

The external notification apparatus 50 is, for example, a lamp, a display device, a speaker, or the like, provided on an outer plate of the mobile body 1 to notify information to the outside of the mobile body 1. The external notification apparatus 50 operates differently when the mobile body 1 is moving on a sidewalk and when it is moving on a roadway. For example, the external notification apparatus 50 is controlled to emit a lamp when the mobile body 1 is moving on a sidewalk and not to emit a lamp when the mobile body 1 is moving on a roadway. A light color of this lamp is preferably a color specified by law. The external notification apparatus 50 may be controlled so that the lamp emits green light when the mobile body 1 is moving on a sidewalk and emits blue light when the mobile body 1 is moving on a roadway. When the external notification apparatus 50 is a display device, the external notification apparatus 50 displays in text or graphics a fact that the mobile body 1 is "traveling on a sidewalk" when the mobile body 1 is traveling on a sidewalk.

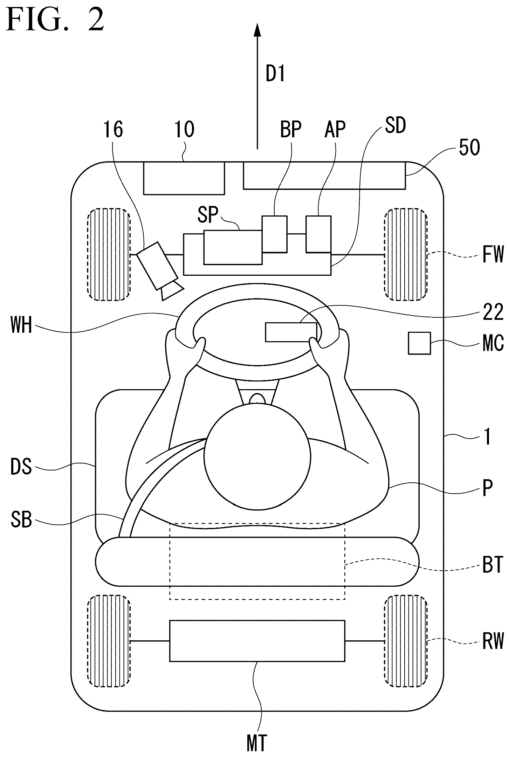

FIG. 2 is a perspective view of the mobile body 1 seen from above. In FIG. 2, FW is a steering wheel, RW is a driving wheel, SD is a steering device, MT is a motor, and BT is a battery. The steering device SD, the motor MT, and the battery BT are included in the drive apparatus 40. Additionally, AP is an accelerator pedal, BP is a brake pedal, WH is a steering wheel, SP is a speaker, and MC is a microphone. The mobile body 1 shown in FIG. 2 is a one-seater mobile body, and the occupant P is seated in the driver's seat DS and wearing a seat belt SB. An arrow D1 is the traveling direction (a speed vector) of the mobile body 1. The external detection device 10 is provided near a front end of the mobile body 1, the internal camera 16 is provided at a position where it can capture an image of the head of the occupant P from in front of the occupant P, and the mode changeover switch 22 is provided in a boss of the steering wheel WH. The external notification apparatus 50 is provided, as a display device, near the front end of the mobile body 1.

Returning to FIG. 1, the storage apparatus 70 is, for example, a non-transient storage apparatus such as a hard disk drive (HDD), a flash memory, or a random access memory (RAM). Navigation map information 72 and the like are stored in the storage apparatus 70. In FIG. 1, the storage apparatus 70 is shown outside a frame of the control apparatus 100, but the storage apparatus 70 may be included in the control apparatus 100. In addition, the storage apparatus 70 may be provided on a server (not shown).

The navigation map information 72 is stored in advance in the storage apparatus 70, and is map information including, for example, information on a center of a road including a roadway and a sidewalk, information on a road boundary, or the like. The navigation map information 72 further includes information on facilities and buildings in contact with the road boundary (such as a name, an address, an area, and the like).

### [Control apparatus]

The control apparatus 100 includes, for example, an acquisition unit 110, an extraction unit 120, a generation unit 130, an identification unit 140, and a control unit 150. The acquisition unit 110, the extraction unit 120, the generation unit 130, the identification unit 140, and the control unit 150 are realized by, for example, a hardware processor such as a central processing unit (CPU) executing a program (software) 74. Some or all of these components may be realized by hardware (a circuit unit; including circuitry) such as large scale integration (LSI), an application specific integrated circuit (ASIC), a field-programmable gate array (FPGA), or a graphics processing unit (GPU), or may be realized by software and hardware in cooperation. The program may be stored in the storage apparatus 70 in advance, or may be stored in a removable storage medium (non-transient storage medium) such as a DVD or CD-ROM and may be installed in the storage apparatus 70 by the storage medium being mounted in a drive device. A combination of the acquisition unit 110, the extraction unit 120, the generation unit 130, and the identification unit 140 is an example of the "information processing apparatus."

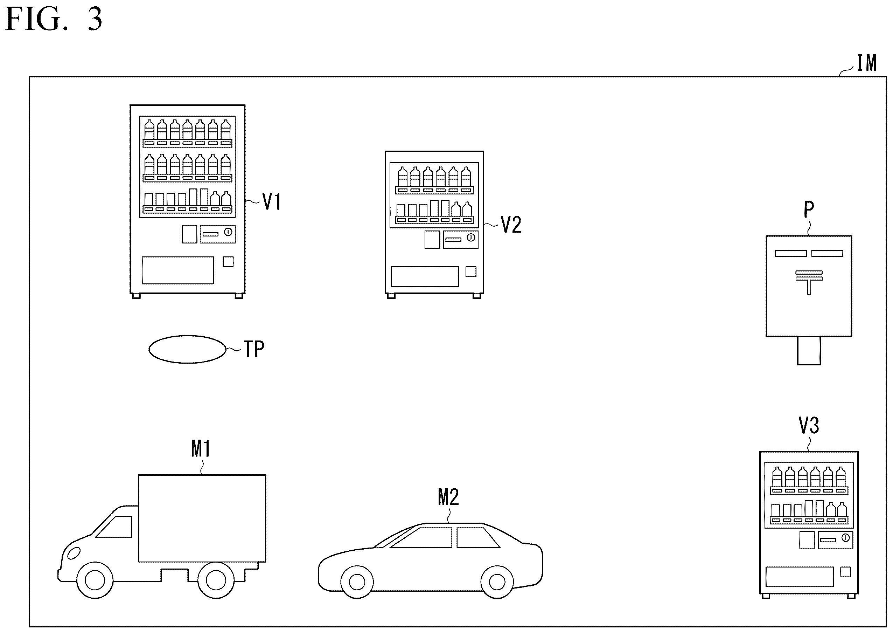

The acquisition unit 110 acquires a captured image IM obtained by an external camera, which is the external detection device 10, capturing an image of the surroundings of the mobile body 1. FIG. 3 is a diagram which shows an example of the captured image IM captured by an external camera. FIG. 3 shows, as an example, a situation in which the captured image IM captured by the external camera includes vehicles M1 and M2, vending machines V1, V2, and V3, and a postbox P. For convenience of description, in the captured image IM, a vending machine V1 is a red vending machine, and vending machines V2 and V3 are blue vending machines.

Furthermore, the acquisition unit 110 acquires an instruction sentence that indicates a target position to be reached by the mobile body 1, input by the occupant of the mobile body 1 via a voice input device that is the HMI 20. For example, in a case of a situation shown in the captured image IM of FIG. 3, the occupant instructs the mobile body 1 to reach a target position TP in front of a vending machine V1 by inputting an instruction sentence such as "stop at a red vending machine behind the truck."

Furthermore, the acquisition unit 110 acquires an image showing a gesture made by the occupant, captured by the internal camera 16, as gesture information. The acquired gesture information is used for processing by the generation unit 130, which will be described below.

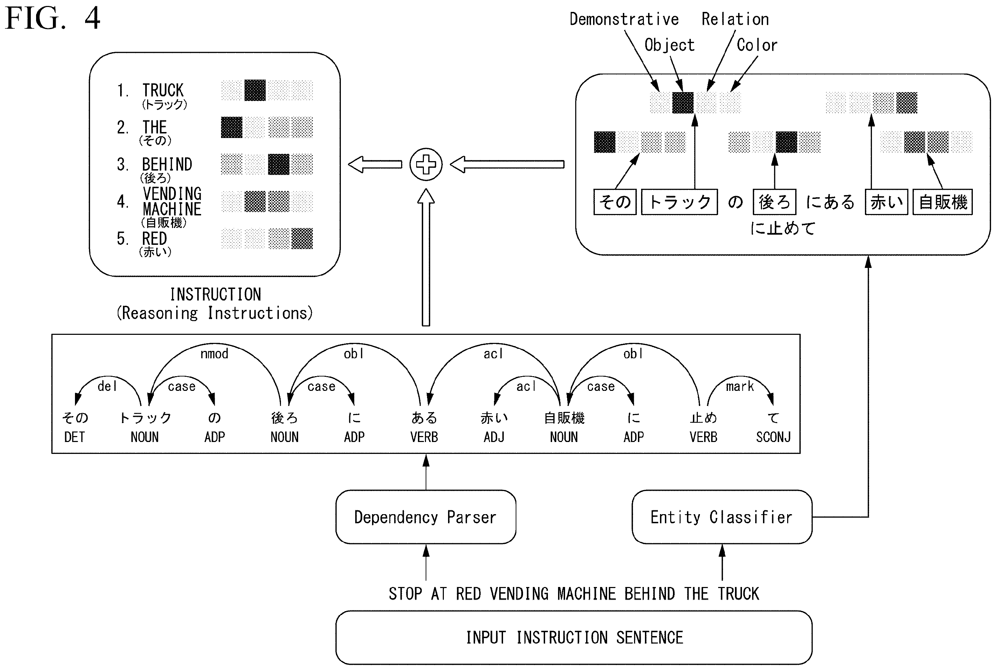

The extraction unit 120 performs first predetermined processing on the input instruction sentence to extract one or more instructions (reasoning instructions) contained in the input instruction sentence. FIG. 4 is a diagram for describing an overview of the first predetermined processing executed by the extraction unit 120. More specifically, the extraction unit 120 performs dependency parsing (dependency parser) and entity classification (entity classifier) on the input instruction sentence as the first predetermined processing. For example, as shown in a left part of FIG. 4, the extraction unit 120 analyzes, as dependency parsing, the instruction sentence "Stop at the red vending machine behind the truck," to determine that "the" is a determiner (det) that modifies "truck," " 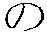 " is a case marker (case) of "truck," "behind" is a noun modifier (nmod) that modifies "truck," and "red" is a clause modifier (acl) that modifies "vending machine." This dependency parsing may be performed using a known method.

At the same time, the extraction unit 120 classifies attributes of each morpheme in the instruction sentence as entity classification. For example, as shown in a right part of FIG. 4, the extraction unit 120 classifies "the" in the instruction sentence "stop at the red vending machine behind the truck" as a demonstrative, classifies "truck" as an object, classifies "behind" as a relation, classifies "red" as a color, and classifies "vending machine" as an object. The extraction unit 120 links and stores the dependency relationships between morphemes as a result of dependency parsing and the attributes of each morpheme as a result of entity classification. An upper left part of FIG. 4 shows that each morpheme (truck, the, behind, vending machine, red) is stored as one or more instructions (reasoning instructions) by linking the dependency relationships with the attributes. More specifically, these one or more instructions may be derived and stored using the method described in Non-Patent Document 1.

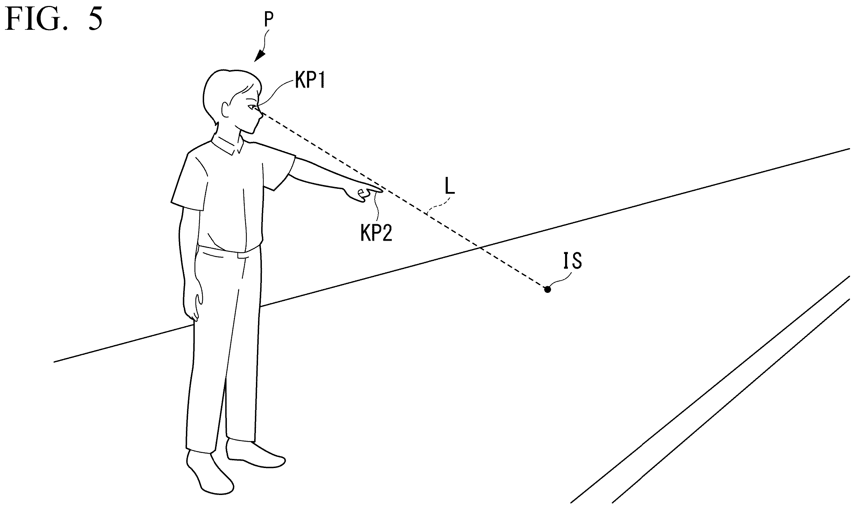

The generation unit 130 performs second predetermined processing on the gesture information acquired by the acquisition unit 110 to generate an estimated distribution for a position indicated by a gesture of the occupant. FIG. 5 is a diagram for describing an overview of the second predetermined processing executed by the generation unit 130. First, the generation unit 130 sets key points to two of parts of the body of the occupant P. FIG. 5 shows, as an example, a situation in which the eyes and wrist of the occupant P are set as key points KP1 and KP2, respectively. The generation unit 130 estimates an intersection IS where an indication line L extending toward the wrist by connecting the eye KP1 and the wrist KP2 intersects with a ground surface as a position indicated by the gesture of the occupant P, and generates an estimated distribution of the gesture position as a probability distribution with the intersection point IS as the maximum value. Probability distribution to be generated may be any type of distribution, such as a normal distribution.

Note that the generation unit 130 may select any key points, but it is preferable that one of the points is the eye, because the occupant P can accurately specify the position through the line of sight. It is desirable that the other point be a part that is easy to identify from an image and may be, for example, the wrist, fingertips, a tip or center of the fist, or the like. Furthermore, when the operator is indicating a destination, the face may be facing a direction of the destination, and the eyes may not be captured by the internal camera 16. In such a case, the eye position may be estimated and identified. When a direction of the face can be identified, an eye position can be estimated. Note that the estimation of the eye position may also be performed using a machine learning model.

Furthermore, the generation unit 130 semantically extracts objects contained in the captured image IM captured by the external camera, and generates a probabilistic scene graph in which a probability that the occupant P indicates a corresponding object is assigned to each extracted object. For example, in a case of FIG. 3, the generation unit 130 extracts vehicles M1 and M2, vending machines V1, V2, and V3, and postbox P. This extraction processing can reduce a load of subsequent processing compared to a method of processing raw data such as deep neural network (DNN). More specifically, the generation of the probabilistic scene graph may be executed using the method described in Non-Patent Document 1.

An initial value of a probability assigned to each object contained in the generated probabilistic scene graph may be uniform (that is, 1/(the number of objects contained in the probabilistic scene graph)), or the generation unit 130 may set a different initial value for each object. For example, the generation unit 130 may use an estimated distribution for a gesture position to set a different initial value depending on the position of each object. More specifically, the generation unit 130 may set a higher initial value as an object is closer to the detected intersection IS, and set a lower initial value as an object is farther from the intersection IS. For example, in the case of FIG. 3, when the occupant P makes a gesture toward a vending machine V1, the highest initial value may be assigned to the vending machine V1, while the lowest initial value may be assigned to a vending machine V3, which is located the farthest from the vending machine V1. The generation unit 130 is an example of a "first generation unit" and a "second generation unit."

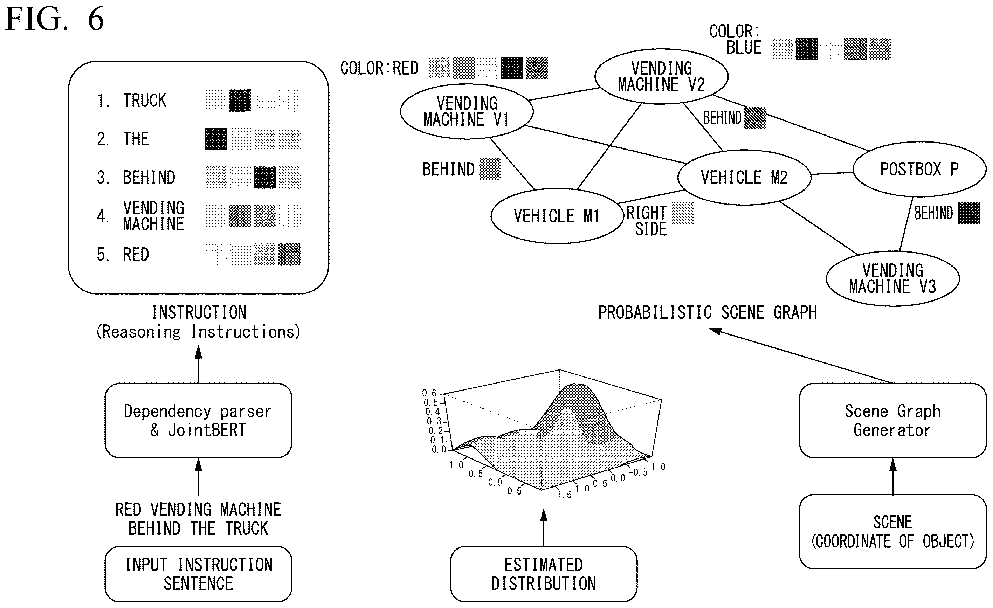

The identification unit 140 uses one or more instructions extracted by the extraction unit 120 to sequentially update the probability of each object contained in the probabilistic scene graph, thereby identifying an object indicated by the occupant. FIG. 6 is a diagram for describing the update processing of the probabilistic scene graph executed by the identification unit 140. The identification unit 140 sequentially extracts one or more instructions extracted by the extraction unit 120, and updates the probabilistic scene graph so that the probability of an object of the probabilistic scene graph corresponding to the extracted instruction becomes higher. For example, in a case of FIG. 6, the identification unit 140 extracts "truck" and "the," and updates the probability values of the vehicles M1 and M2 so that they become higher. Next, the identification unit 140 extracts "behind" and transitions from the vehicle M1 to the vending machine V1 and transitions from the vehicle M2 to the vending machine V2 in the probabilistic scene graph. Next, the identification unit 140 extracts "vending machine" and "red" to identify the vending machine V1 as a vending machine having the attribute "red," and updates the probability value of the vending machine V1 so that it becomes higher. In this manner, the probabilities attached to the objects in the probabilistic scene graph are sequentially updated, and an object with the maximum probability value is finally identified as the object indicated by the occupant P. In the case of FIG. 6, the identification unit 140 can finally identify the vending machine V1 with the maximum probability value as the object indicated by the occupant P. In more detail, these updates of the probabilistic scene graph may be executed using the method described in Non-Patent Document 1.

In this manner, the identification unit 140 uses the probabilistic scene graph to finally identify an object with the maximum probability value as the object indicated by the occupant P. However, in some cases, there may be a plurality of objects with the maximum probability value, or a difference in probability value between an object with the maximum probability value and an object with the second largest probability value may be small, making it impossible to identify a single object. More generally, the identification unit 140 calculates an entropy of a probability distribution calculated for each object in the probabilistic scene graph, and when the calculated entropy is large (equal to or greater than a threshold value), it can determine that the object indicated by the occupant P cannot be identified as a single object. In such cases, a prior art has been finally unable to identify the object indicated by the occupant P. On the other hand, in the present invention, when there are a plurality of candidates for the object indicated by the occupant P as a result of update processing of the probabilistic scene graph, a question sentence is generated to identify one of the plurality of candidates, and the question sentence is inquired to the occupant, and a response is received from the occupant, thereby finally identifying the object indicated by the occupant P.

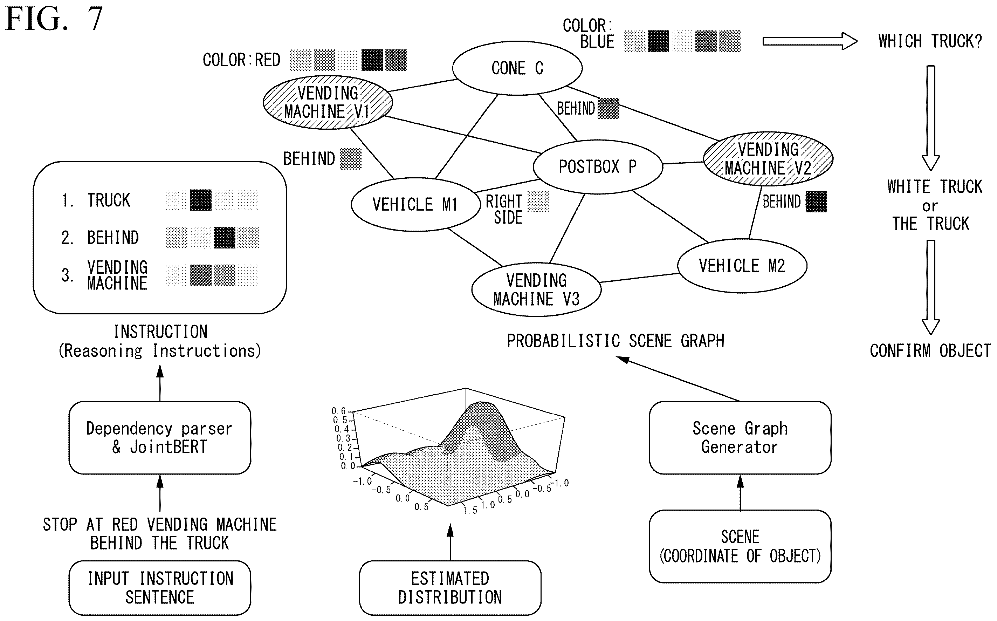

FIG. 7 is a diagram for describing processing for generating a question sentence executed by the identification unit 140. As an example, FIG. 7 shows a case where the occupant inputs "Stop at the vending machine behind the truck" as an instruction sentence, and as a result of update processing of the probabilistic scene graph by the identification unit 140, the vending machine V1 behind the vehicle M1 and the vending machine V2 behind the vehicle M2 are identified as objects with the same probability value (or objects whose difference in probability value is within a threshold value).

In such a case, the identification unit 140 generates a question for identifying one of the identified objects. For example, a question sentence may be generated to directly identify the plurality of objects, such as "Which vending machine?," or a question sentence may be generated to indirectly identify the plurality of objects, such as "Which truck?" (that is, when the trucks are identified as one, the vending machine can be identified by combining it with a noun modifier "behind").

Furthermore, for example, the identification unit 140 may collate attributes (for example, color) of the plurality of object candidates and generate a question sentence for attributes having different values. In a case of FIG. 7, the vending machine V1 has a color attribute of "red," while the vending machine V2 does not have a color attribute for identification, so the identification unit 140 may generate a question such as "Is a color of a vending machine red?" on the basis of a difference in the color attribute.

The identification unit 140 transmits the generated question sentence to the HMI 20, receives an answer input by the occupant on the HMI 20, and finally identifies an object indicated by the occupant P on the basis of the received answer. For example, the identification unit 140 may also receive a gesture by the occupant P again, and finally identify an object closest to a direction of the received gesture as the object indicated by the occupant P. In this manner, even if there are a plurality of candidates for the indicated object due to the update processing of the probabilistic scene graph, the indicated object can be uniquely identified by generating a question sentence for the occupant P.

The control unit 150 drives the drive apparatus 40 of the mobile body 1 with the object identified by the identification unit 140 as a target position to cause the mobile body 1 to travel to the target position.

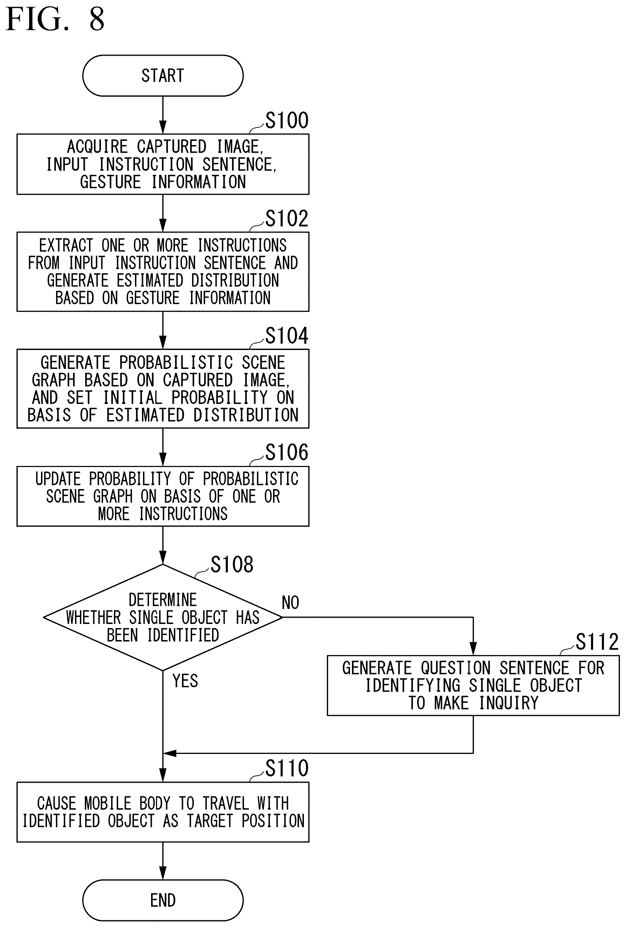

Next, referring to FIG. 8, a flow of processing executed by the control apparatus 100 according to the present embodiment will be described. FIG. 8 is a flowchart which shows an example of the flow of the processing executed by the control apparatus 100. The processing according to this flowchart is executed in response to an input of an instruction sentence and a gesture by the occupant while the mobile body 1 is traveling.

First, the acquisition unit 110 acquires a captured image IM, an input instruction sentence, and gesture information (step S100). Next, the generation unit 130 extracts one or more instructions from the input instruction sentence acquired by the acquisition unit 110, and generates an estimated distribution for a position where the occupant P has made the instruction based on the gesture information (step S102).

Next, the generation unit 130 generates a probabilistic scene graph based on the captured image IM, and sets an initial probability of the probabilistic scene graph on the basis of the estimated distribution (step S104). Next, the identification unit 140 updates a probability of the probabilistic scene graph on the basis of one or more instructions (step S106).

Next, the identification unit 140 determines whether a single object has been identified as a result of updating the probabilistic scene graph (step S108). When it is determined that a single object has been identified, the control unit 150 causes the mobile body 1 to travel with the identified object as the target position (step S110). On the other hand, when it is determined that the single object has not been identified, the identification unit 140 generates a question sentence for identifying the single object to make an inquiry, and identifies the single object (step S112). After that, the identification unit 140 transitions the processing to step S110. As a result, processing related to this flowchart ends.

In the embodiment described above, as an example, it is described that the information processing apparatus is mounted on the mobile body 1 and is utilized for traveling. However, the present invention is not limited to such a configuration, and more generally, the information processing apparatus identifies the indicated object on the basis of at least the captured image, the input instruction sentence, and the gesture information, and when there are a plurality of candidates for the indicated object, generates an additional question sentence to make an inquiry, thereby finally identifying the single object. For example, the information processing apparatus according to the present invention can be utilized to identify an object instructed by a user in a virtual reality (VR) space.

According to the present embodiment described above, a captured image, an input instruction sentence, and gesture information are acquired, and an object indicated by the occupant is identified on the basis of a probabilistic scene graph generated from the captured image, instructions extracted from the input instruction sentence, and an estimated distribution generated based on the gesture information. When there are a plurality of candidates for the object instructed by the occupant, a question sentence for identifying a single object is generated to make an inquiry to the occupant. As a result, it is possible to utilize modalities such as a line of sight and a gesture of a person, and resolve ambiguity that arises during an inference process.

The embodiment described above can be expressed as follows.

An information processing apparatus includes a storage medium configured to store computer-readable instructions, and a processor connected to the storage medium, in which the processor executes the computer-readable instructions to acquire a captured image of surroundings of a mobile body captured by a camera mounted on the mobile body, an input instruction sentence input by an occupant of the mobile body, and gesture information related to a gesture made by the occupant, extract one or more instructions included in the input instruction sentence by performing first predetermined processing on the input instruction sentence, generate an estimated distribution for a position indicated by the occupant by performing second predetermined processing on the gesture information, generate a probabilistic scene graph from the captured image, in which a probability is assigned to each object contained in the captured image, and identify an object indicated by the occupant in the captured image on the basis of the one or more instructions, the estimated distribution, and the probabilistic scene graph.

Although the present invention has been described above using an embodiment, the present invention is not limited to such an embodiment, and various modifications and substitutions can be made within a range not departing from the gist of the present invention.

### REFERENCE SIGNS LIST

10 External detection device
12 Mobile body sensor
14 Operator
16 Internal camera
18 Positioning apparatus
20 HMI
22 Mode changeover switch
30 Moving mechanism
40 Drive apparatus
50 External notification apparatus
70 Storage apparatus
72 Navigation map information
100 Control apparatus
110 Acquisition unit
120 Extraction unit
130 Generation unit
140 Identification unit
150 Control unit

## Claims

1. An information processing apparatus comprising:
an acquisition unit configured to acquire a captured image of surroundings of a mobile body captured by a camera mounted on the mobile body, an input instruction sentence input by a person of the mobile body, and gesture information related to a gesture made by the person;
an extraction unit configured to extract one or more instructions included in the input instruction sentence by performing first predetermined processing on the input instruction sentence;
a first generation unit configured to generate an estimated distribution for a position indicated by the person by performing second predetermined processing on the gesture information;
a second generation unit configured to generate a probabilistic scene graph from the captured image, in which a probability is assigned to each object contained in the captured image; and
an identification unit configured to identify an object indicated by the person in the captured image on the basis of the one or more instructions, the estimated distribution, and the probabilistic scene graph.

2. The information processing apparatus according to claim 1,
wherein the first predetermined processing is processing of performing at least dependency parsing and attribute classification on the input instruction sentence.

3. The information processing apparatus according to claim 1,
wherein the second predetermined processing is processing of generating the estimated distribution on the basis of key points of the person included in the gesture information.

4. The information processing apparatus according to any one of claims 1 to 3,
wherein the identification unit identifies the object by sequentially updating the probability of each object contained in the probabilistic scene graph using the one or more extracted instructions.

5. The information processing apparatus according to claim 4,
wherein the second generation unit sets an initial value of the probability assigned to each object contained in the probabilistic scene graph on the basis of the estimated distribution.

6. The information processing apparatus according to claim 4,
wherein the identification unit generates a question for identifying one of a plurality of objects when the plurality of objects have been identified by the update.

7. An information processing method comprising:
by a computer,
acquiring a captured image of surroundings of a mobile body captured by a camera mounted on the mobile body, an input instruction sentence input by a person of the mobile body, and gesture information related to a gesture made by the person;
extracting one or more instructions included in the input instruction sentence by performing first predetermined processing on the input instruction sentence;
generating an estimated distribution for a position indicated by the person by performing second predetermined processing on the gesture information;
generating a probabilistic scene graph from the captured image, in which a probability is assigned to each object contained in the captured image; and
identifying an object indicated by the person in the captured image on the basis of the one or more instructions, the estimated distribution, and the probabilistic scene graph.

8. A program that causes a computer to execute:
acquiring a captured image of surroundings of a mobile body captured by a camera mounted on the mobile body, an input instruction sentence input by a person of the mobile body, and gesture information related to a gesture made by the person;
extracting one or more instructions included in the input instruction sentence by performing first predetermined processing on the input instruction sentence;
generating an estimated distribution for a position indicated by the person by performing second predetermined processing on the gesture information;
generating a probabilistic scene graph from the captured image, in which a probability is assigned to each object contained in the captured image; and
identifying an object indicated by the person in the captured image on the basis of the one or more instructions, the estimated distribution, and the probabilistic scene graph.
